# EUROPEAN PATENT APPLICATION

(11) **EP 4 460 085 A1**
(43) Date of publication of application: **06.11.2024**
(21) Application number: 24173526.5
(22) Date of filing: 30.04.2024
(51) Int. Cl.: H04W 36/00, H04W 36/36, G06N 3/08

(54) **SYSTEM AND METHOD FOR PERFORMING A CONDITIONAL HANDOVER**

(30) Priority: 02.05.2023 IN 202341031262; 29.04.2024 IN 202341031262
(71) Applicant: Samsung Electronics Co., Ltd., Suwon-si, Gyeonggi-do 16677 (KR)
(72) Inventor: SUNDARARAJU, Sathia Chandrane, 560048 Bengaluru (IN); DANDRA, Prasad Basavaraj, 560048 Bengaluru (IN); MADHURANTAKAM, Shrinath Ramamoorthy, 560048 Bengaluru (IN); VANAMA, Phanindhar, 560048 Bengaluru (IN)
(74) Representative: Marks & Clerk LLP

(57) **Abstract**

A method for performing a CHO includes receiving, via a network entity, a CHO reconfiguration associated with a plurality of target cells, identifying one or more target cells from among the plurality of target cells using the CHO reconfiguration, each of the one or more target cells having a higher signal strength than a serving cell associated with the UE, determining one or more handover trigger parameters associated with each of the one or more target cells using a network analysis-based Machine Learning model, the determining of the one or more handover trigger parameters being based on one or more network parameters, historical handover data, and one or more mobility parameters, selecting a first target cell from among the one or more target cells based on the one or more handover trigger parameters, and performing the CHO from the serving cell to the first target cell.

## Description

### TECHNICAL FIELD

The present disclosure generally relates to wireless communication, and more particularly relates to a system and a method for performing a conditional handover.

### BACKGROUND

In 3rd Generation Partnership Project (3GPP) Release16, Conditional Handover (CHO) is a feature introduced to improve handover robustness and reduce handover failures at cell edge scenarios. This feature is applied for both Long Term Evolution (LTE) and New Radio (NR). The CHO feature is applied in the Radio Resource Control (RRC)-Connected state. A source Next Generation Node B (gNB)/ Evolved Node B (eNB) prepares the list of potential handover candidates and block the radio resources at a target gNB/eNB. Further, User Equipment (UE) receives a list of conditional reconfigurations with triggering conditions. Furthermore, CHO includes two operations, e.g., candidates' measurement evaluation and handover execution on the target cell once trigger criteria are met.

In conventional solutions, even though CHO provides a handover configuration to the UEs in advance, the UEs still face service interruptions caused by radio link failure. One of the reasons for the service interruptions is that gNBs (also referred to herein as gNodeBs) cannot provide ideal (or accurate) handover parameters to the UEs which work ideally (or sufficiently well) in the upcoming conditions of the UE. The UE uses the CHO trigger configuration parameters which were computed by the network and shared in advance with the UE before actual handover occurs. Also, in the conventional solutions, there is no consideration of dynamically changing target cells and serving cell signal conditions or other parameters (like speed) impacting the mobility procedure. Further, the conventional solutions also fail to give preferences (or priorities) for the services supported in target cells.

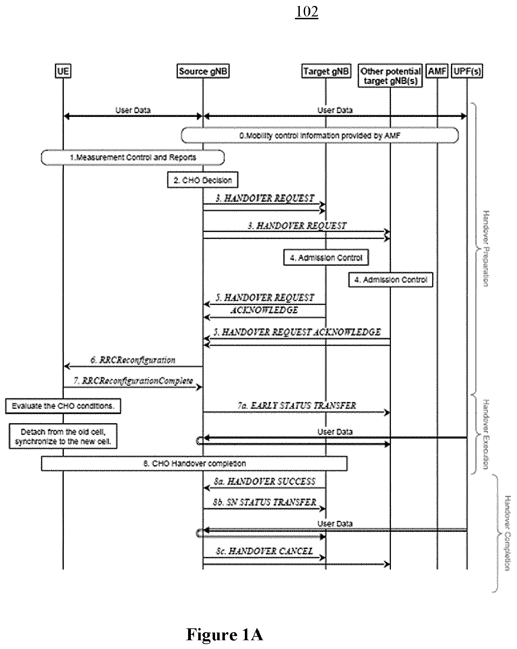

**Figure 1A** illustrates a sequence flow diagram 102 depicting a Conditional Handover (CHO) scenario, according to a conventional technique. In the conventional technique, mobility control information is provided by an Access and Mobility Management Function (AMF). Further, the measurement control and reports are sent to a source gNodeB (gNB) and the network makes a decision for the CHO. Further, the handover request is shared with other potential target gNBs. Furthermore, the admission control operation is performed. Next, the handover request is acknowledged. Accordingly, the RRC reconfiguration is shared with the UE and the RRC reconfiguration is completed. Further, early status is transferred to the other potential target gNBs.

Further, the CHO is completed. Furthermore, handover is successful and sequence number (SN) status is transferred. Upon transferring the SN status, the handover is canceled.

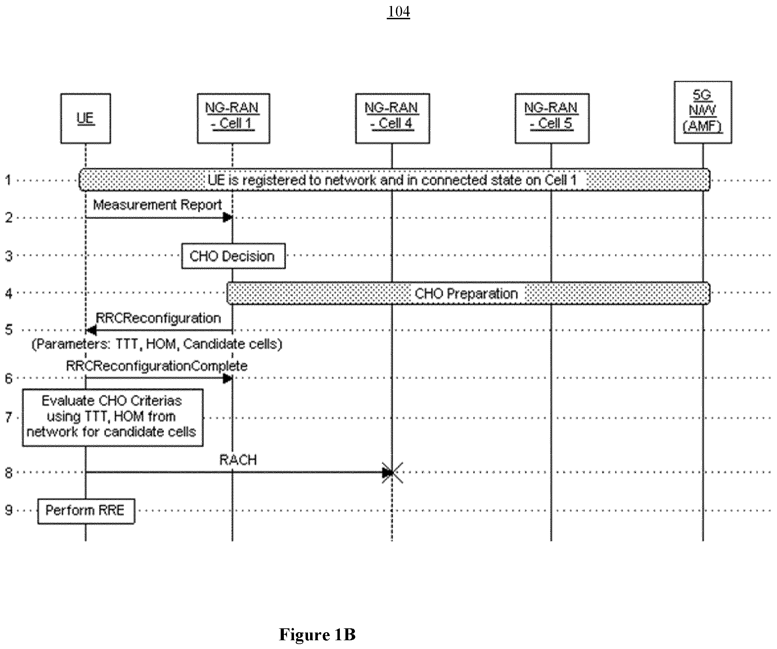

**Figure 1B** illustrates a sequence flow diagram 104 depicting the CHO failure scenario, according to another conventional technique. In the conventional technique, the UE is registered on a Next-Generation Radio Access Network (NG-RAN) Cell 1. Further, the measurement report is sent to the network and the network makes a decision for the CHO, and the preparation phase is initiated to other cells (as UE may handover to these cells based on matching criteria). Furthermore, the NG-RAN Cell 1 network indicated Time-to-Trigger (TTT), Handover Margin (HOM), candidate cells to be measured, and the like to UE using RRC reconfiguration. Accordingly, the UE responds with RRC reconfiguration complete.

Further, the UE evaluates the CHO using the TTT and HOM parameters for the given candidate cell. By the time TTT expired, UE attempted RACH (Random Access Channel) procedure on CHO target cell 4 and encountered RACH failure. For recovery, the UE performs RRC Connection Re-Establishment (RRE) procedure.

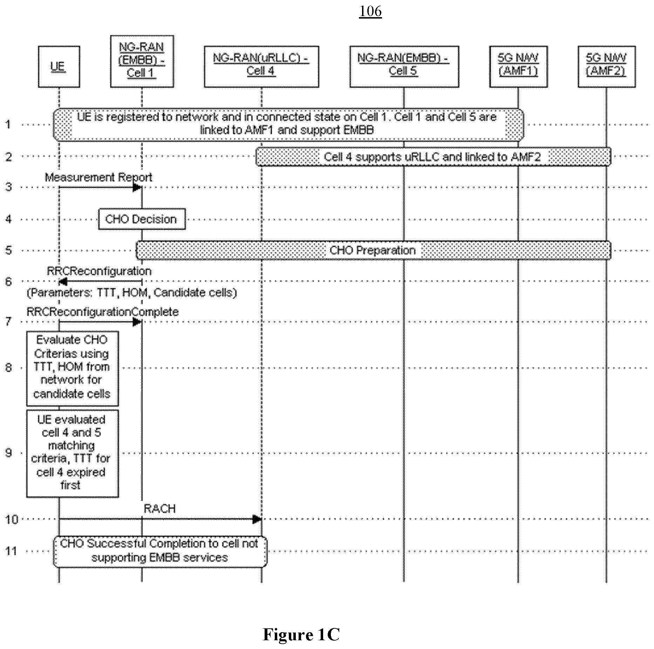

**Figure 1C** illustrates a sequence flow diagram 106 depicting a scenario of CHO to a wrong cell, according to a conventional technique. As shown in Figure 1B, the UE is registered on an NG-RAN Cell 1. Further, the measurement report is sent to the network. Accordingly, the network decides on the CHO and the preparation phase is initiated to other cells (as UE may HO to these cells based on matching criteria). The NG-RAN Cell 1 network indicated TTT, HOM, candidate cells to be measured, and the like to UE using RRC reconfiguration. The UE responds with RRC reconfiguration complete.

Further, the UE, preferring (or prioritizing) eMBB ((Enhanced Mobile Broadband) services, evaluates the CHO conditions using the TTT and HOM parameters for a given candidate cell. The UE evaluated both cell 4 (eMBB not supported) and cell 5 (eMBB supported). Furthermore, the TTT timer for cell 4 expired first. The UE performed CHO to cell 4 which doesn't support eMBB services. Thus, the CHO is performed on the wrong cell.

### SUMMARY

Embodiments provide a technique and method that may overcome each of the above-identified challenges and limitations associated with the conventional solutions.

This summary is provided to introduce a selection of concepts, in a simplified format, that are further described in the detailed description of the disclosure. This summary is neither intended to identify key or essential inventive concepts of the disclosure nor is it intended to determine the scope of the disclosure.

According to embodiments of the present disclosure, a method for performing a conditional handover (CHO) is disclosed. The method includes receiving, via a network entity, a CHO reconfiguration associated with a plurality of target cells, identifying one or more target cells from among the plurality of target cells using the CHO reconfiguration, each of the one or more target cells having a higher signal strength than a serving cell associated with the UE, determining one or more handover trigger parameters associated with each of the one or more target cells using a network analysis-based Machine Learning model, the determining of the one or more handover trigger parameters being based on one or more network parameters, historical handover data, and one or more mobility parameters, selecting a first target cell from among the one or more target cells based on the one or more handover trigger parameters, and performing the CHO from the serving cell to the first target cell.

According to embodiments of the present disclosure, a system for performing a conditional handover (CHO) is disclosed. The system includes processing circuitry configured to receive, via a network entity, a CHO reconfiguration associated with a plurality of target cells, identify one or more target cells from among the plurality of target cells using the CHO reconfiguration, each of the one or more target cells having a higher signal strength than a serving cell associated with the UE, determine one or more handover trigger parameters associated with each of the one or more target cells using a network analysis-based Machine Learning model, the determining of the one or more handover trigger parameters being based on one or more network parameters, historical handover data, and one or more mobility parameters, select a first target cell from among the one or more target cells based on the one or more handover trigger parameters, and perform the CHO from the serving cell to the first target cell.

According to embodiments of the present disclosure, a non-transitory computer-readable medium storing instructions is disclosed that, when executed by at least one processor, cause the at least one processor to perform a method for performing a conditional handover (CHO). The method includes receiving, via a network entity, a CHO reconfiguration associated with a plurality of target cells, identifying one or more target cells from among the plurality of target cells using the CHO reconfiguration, each of the one or more target cells having a higher signal strength than a serving cell associated with the UE, determining one or more handover trigger parameters associated with each of the one or more target cells using a network analysis-based Machine Learning model, the determining of the one or more handover trigger parameters being based on one or more network parameters, historical handover data, and one or more mobility parameters, selecting a first target cell from among the one or more target cells based on the one or more handover trigger parameters, and performing the CHO from the serving cell to the first target cell.

To further clarify the advantages and features of the present disclosure, a more particular description of the disclosure will be rendered by reference to specific examples thereof, which are illustrated in the appended drawings. It is appreciated that these drawings depict only typical examples of the disclosure and are therefore not to be considered limiting of its scope. The disclosure will be described and explained with additional specificity and detail with the accompanying drawings.

The CHO reconfiguration may be received without handover trigger parameters/details. Additionally, or alternatively, the CHO reconfiguration may include capabilities/supported features for each or at least one CHO candidate, i.e., capabilities/supported features of at least one or each of the plurality of target cells.

At least some of the above and other features of the disclosure are set out in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
**Figure 1A** illustrates a sequence flow diagram depicting a Conditional Handover (CHO) scenario, according to a conventional technique;
**Figure 1B** illustrates a sequence flow diagram depicting a scenario of CHO to a wrong cell, according to a conventional technique;
**Figure 1C** illustrates a sequence flow diagram 106 depicting a scenario of CHO to a wrong cell, according to a conventional technique;
**Figure 2** illustrates a block diagram of a system for performing the CHO, according to embodiments of the present disclosure;
**Figure 3** illustrates a block diagram of a plurality of modules of the system shown in Figure 2, according to embodiments of the present disclosure;
**Figure 4** illustrates a flow chart depicting the process of performing the CHO, according to embodiments of the present disclosure;
**Figure 5** illustrates a sequence flow diagram depicting the operation of the system for performing the CHO, according to embodiments of the present disclosure;
**Figure 6** illustrates a sequence flow diagram depicting the CHO success scenario, according to embodiments of the present disclosure;
**Figure 7** illustrates a sequence flow diagram depicting a scenario of the CHO to a service supported cell, according to embodiments of the present disclosure; and
**Figure 8** illustrates an example process flow depicting a method for performing the CHO, according to embodiments of the present disclosure.

Further, skilled artisans will appreciate those elements in the drawings are illustrated for simplicity and may not have necessarily been drawn to scale. For example, the flow charts illustrate the method in terms of the most prominent operations involved to help to improve understanding of aspects of the present disclosure. Furthermore, in terms of the construction of the device, one or more components of the device may have been represented in the drawings by conventional symbols, and the drawings may show only those specific details that are pertinent to understanding embodiments of the present disclosure so as not to obscure the drawings with details that will be readily apparent to those of ordinary skill in the art having the benefit of the description herein.

### DETAILED DESCRIPTION

For the purpose of promoting an understanding of the principles of the disclosure, reference will now be made to the various examples and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or similar language means that a particular feature, structure, or characteristic described in connection with the example is included in embodiments of the present disclosure.

The terms "comprises", "comprising", or any other variations thereof, are intended to cover a non-exclusive inclusion, such that a process or method that comprises a list of operations does not include only those operations but may include other operations not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

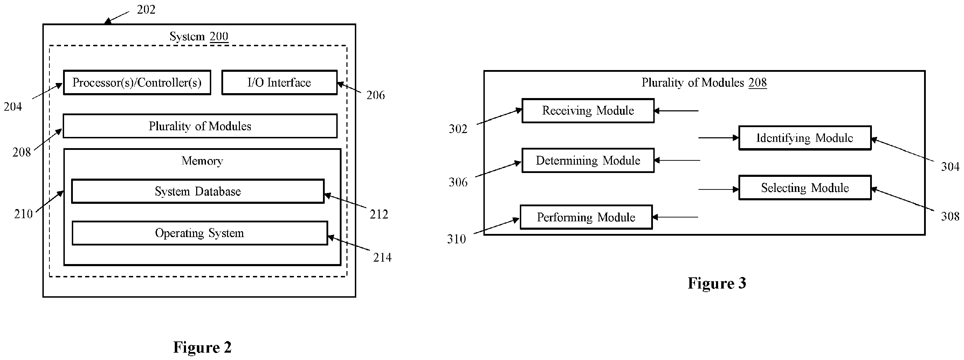

**Figure 2** illustrates a block diagram of a system for performing the CHO, according to embodiments of the present disclosure. In embodiments of the present disclosure, the system 200 is implemented in a User Equipment (UE) 202. In embodiments of the present disclosure, the UE 202 may correspond to a smartphone, a camera, a laptop computer, a desktop computer, a wearable device, or any other device. In embodiments of the present disclosure, the CHO is a process in telecommunications where the UE 202 switches its connection from one base station (or cell) to another while maintaining an ongoing call or data session. This handover occurs conditionally based on certain criteria, such as signal strength, quality, or network congestion.

The system 200 may include one or more processors/controllers 204, an Input/Output (I/O) interface 206, a plurality of modules 208, and/or a memory 210.

In embodiments, the one or more processors/controllers 204 may be operatively coupled to each of the respective I/O interface 206, the plurality of modules 208, and/or the memory 210. In embodiments, the one or more processors/controllers 204 may include at least one data processor for executing processes in a Virtual Storage Area Network. The one or more processors/controllers 204 may include specialized processing units such as integrated system (bus) controllers, memory management control units, floating point units, graphics processing units, digital signal processing units, etc. In embodiments, the one or more processors/controllers 204 may include a Central Processing Unit (CPU), a Graphics Processing Unit (GPU), or both. The one or more processors/controllers 204 may be one or more general processors, digital signal processors, application-specific integrated circuits, field-programmable gate arrays, servers, networks, digital circuits, analog circuits, combinations thereof, or other now known or later developed devices for analyzing and processing data. The one or more processors/controllers 204 may execute a software program, such as code generated manually (e.g., programmed) to perform the desired operation. In embodiments of the present disclosure, the one or more processors/controllers 204 may be a general-purpose processor, such as the CPU, an Application Processor (AP), or the like, a graphics-only processing unit such as the GPU, a Visual Processing Unit (VPU), and/or an Artificial Intelligence (AI)-dedicated processor, such as a Neural Processing Unit (NPU).

Further, the one or more processors/controllers 204 may control the processing of input data in accordance with a predefined (or alternatively, given) operating rule or machine learning (ML) model stored in the non-volatile memory and the volatile memory. The predefined (or alternatively, given) operating rule or the ML model may be provided through training or learning.

Here, being provided through learning means that, by applying a learning technique to a plurality of learning data, a predefined (or alternatively, given) operating rule or the ML model of a desired characteristic is made. The learning may be performed in the UE 202 itself in which ML according to embodiments is performed, and/or may be implemented through a separate server/system.

Furthermore, the ML model may include a plurality of neural network layers. Each layer has a plurality of weight values and performs a layer operation through the calculation of a previous layer and an operation of a plurality of weights. Examples of neural networks include but are not limited to, Convolutional Neural Networks (CNN), Deep Neural Networks (DNN), Recurrent Neural Networks (RNN), Restricted Boltzmann Machines (RBM), Deep Belief Networks (DBN), Bidirectional Recurrent Deep Neural Networks (BRDNN), Generative Adversarial Networks (GAN), and deep Q-networks.

The learning technique is a method for training a predetermined (or alternatively, given) target device (for example, a robot) using a plurality of learning data to cause, allow, or control the target device to decide or predict. Examples of learning techniques include, but are not limited to, supervised learning, unsupervised learning, semi-supervised learning, or reinforcement learning.

The one or more processors/controllers 204 may be disposed in communication with one or more input/output (I/O) devices via the respective I/O interface 206. The I/O interface 206 may employ communication code-division multiple access (CDMA), high-speed packet access (HSPA+), global system for mobile communications (GSM), long-term evolution (LTE), Worldwide Interoperability for Microwave Access (WiMAX), or the like, etc.

The one or more processors/controllers 204 may be disposed in communication with a communication network via a network interface. In embodiments, the network interface may be the I/O interface 206. The network interface may connect to the communication network to enable the connection of the UE 202 with the other devices. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network may include, without limitation, a direct interconnection, local area network (LAN), wide area network (WAN), wireless network (e.g., using Wireless Application Protocol), the Internet, and the like.

In embodiments, the memory 210 may be communicatively coupled to the one or more processors/controllers 204. The memory 210 may be configured to store data, and instructions executable by the one or more processors/controllers 204. The memory 210 may include but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory 210 may include a cache or random-access memory for the one or more processors/controllers 204. In alternative or additional examples, the memory 210 may be a part of the one or more processors/controllers 204, such as a cache memory of a processor, the system memory, or other memory. In embodiments, the memory 210 may be an external storage device or database for storing data. The memory 210 may be operable to store instructions executable by the one or more processors/controllers 204. The functions, acts, operations, or tasks illustrated in the figures or described may be performed by the programmed processor/controller for executing the instructions stored in the memory 210. The functions, acts, operations, or tasks are independent of the particular type of instruction set, storage media, processor, or processing strategy and may be performed by software, hardware, integrated circuits, firmware, micro-code, and the like, operating alone or in combination. Likewise, processing strategies may include multiprocessing, multitasking, parallel processing, and the like.

In embodiments, the plurality of modules 208 may be included within the memory 210. The memory 210 may further include a system database 212 to store data. The plurality of modules 208 may include a set of instructions that may be executed to cause the system 200 to perform any one or more of the methods/processes disclosed herein. The plurality of modules 208 may be configured to perform the operations of the present disclosure using the data stored in the system database 212 for performing the CHO, as discussed herein. In embodiments, each of the plurality of modules 208 may be a hardware unit that may be outside the memory 210. Further, the memory 210 may include an operating system 214 for performing one or more tasks of the system 200, as performed by a generic operating system in the communications domain. In embodiments, the system database 212 may be configured to store the information as required (or for use) by the plurality of modules 208 and the one or more processors/controllers 204 for performing the CHO.

In embodiments of the present disclosure, at least one of the plurality of modules 208 may be implemented through the ML model. A function associated with the ML may be performed through the non-volatile memory, the volatile memory, and the one or more processors/controllers 204.

In embodiments, the I/O interface 206 may enable input and output to and from the system 200 using suitable devices such as, but not limited to, a display, a keyboard, a mouse, a touch screen, a microphone, a speaker, and so forth.

Further, the present disclosure also contemplates a non-transitory computer-readable medium that includes instructions or receives and executes instructions responsive to a propagated signal. Further, the instructions may be transmitted or received over the network via a communication port or interface or using a bus (not shown). The communication port or interface may be a part of the one or more processors/controllers 204 or may be a separate component. The communication port may be created in software or may be a physical connection in hardware. The communication port may be configured to connect with a network, external media, the display, or any other components in the UE 202, or combinations thereof. The connection with the network may be a physical connection, such as a wired Ethernet connection, or may be established wirelessly. Likewise, the additional connections with other components of the UE 202 may be physical or may be established wirelessly. The network may alternatively be directly connected to the bus. For the sake of brevity, the architecture and standard operations of the operating system 214, the memory 210, the system database 212, the one or more processors/controllers 204, and the I/O interface 206 are not discussed in detail.

**Figure 3** illustrates a block diagram of a plurality of modules 208 of the system 200 shown in Figure 2, according to embodiments of the present disclosure. In embodiments of the present disclosure, the plurality of modules 208 may include but is not limited to, a receiving module 302, an identifying module 304, a determining module 306, a selecting module 308, and/or a performing module 310. The plurality of modules 208 may be implemented by way of suitable hardware and/or software applications.

In embodiments of the present disclosure, the receiving module 302 may be configured to receive, via a network entity, a CHO reconfiguration associated with a plurality of target cells. The network entity refers to any element within the cellular network infrastructure that interacts with the UE 202, such as the base station. eNodeB, or the like. In embodiments of the present disclosure, the CHO reconfiguration refers to the adjustment or modification of the conditions under which a handover occurs in a telecommunications network. The CHO reconfiguration involves changing the criteria or parameters that trigger a handover from one base station to another for the user equipment.

Further, the identifying module 304 may be configured to identify, by using the received CHO reconfiguration, one or more target cells from the plurality of target cells having a greater signal strength as compared to (e.g., a greater signal strength than that of) a serving cell associated with the UE 202.

Furthermore, the determining module 306 may be configured to determine, by using a network analysis-based Machine Learning (ML) model, one or more handover trigger parameters associated with each of the identified one or more target cells based on one or more network parameters, historical handover data, and/or one or more mobility parameters impacting mobility. According to embodiments, for example, the network analysis-based ML model may output one or more handover trigger parameters based on being applied to (e.g., or based on inputting) one or more network parameters, historical handover data, and/or one or more mobility parameters impacting mobility. In embodiments of the present disclosure, the one or more network parameters include a slice type, serving cell signal conditions, target cell signal conditions, service type, one or more other network capabilities, or any combination thereof. For example, slice type may be enhanced Mobile Broadband (eMBB), ultra-Reliable Low Latency Communications (uRLLC), and the like. Further, the service type refers to the type or category of service that a network is designed to provide, such as data service, voice service, video service, messaging service, security service, and the like. In embodiments of the present disclosure, the one or more mobility parameters impacting mobility include a velocity of the UE 202.

In embodiments of the present disclosure, the historical handover data corresponds to one or more post handover observations associated with the UE 202 upon (e.g., based on) performing the CHO to a corresponding target cell from the plurality of target cells. The one or more post handover observations include ping-pong, radio link failure, throughput drop, or any combination thereof. In embodiments of the present disclosure, the one or more handover trigger parameters include a Handover Margin (HOM) between source and target cells, source cell threshold, target cell threshold, a Time-to-Trigger (TTT), or any combination thereof.

According to embodiments, the network analysis-based ML model may be generated by applying a learning technique (e.g., by the UE 202 or an external server) to learning data. The learning data may include, for example, learning input data respectively associated with learning output data. The learning input data may include one or more learning network parameters, learning historical handover data, and/or one or more learning mobility parameters. The learning output data may include one or more learning handover trigger parameters. In each learning iteration, the network analysis-based ML model may be applied to learning input data to output one or more handover trigger parameters. The output one or more handover trigger parameters may be compared to the one or more learning handover trigger parameters associated with the learning input data, and at least one parameter of the network analysis-based ML model may be adjusted based on the comparison. For example, the comparison may include determining a difference between the output one or more handover trigger parameters and the one or more learning handover trigger parameters, and the at least one parameter of the network analysis-based ML model may be adjusted to minimize (or reduce) this difference (e.g., using a loss function). According to embodiments, for example, the network analysis-based ML model may be trained as discussed above to minimize (or reduce) ping-pong, radio link failure, throughput drop, etc., prioritize target cells providing a selected (or configured) slice type and/or service type, maximize (or increase) a target cell signal condition (e.g., a target cell signal strength) or a difference between the target cell signal condition and the source cell signal condition (e.g., a source cell signal strength), etc. According to embodiments, the learning technique may be continued during operation of the UE 202 to, for example, adjust the at least one parameter of the network analysis-based ML model based on historical handover data generated when (e.g., on each occurrence of) the UE 202 performs CHO.

The selecting module 308 may be configured to select an optimal (or improved) target cell from the one or more target cells based on the determined one or more handover trigger parameters.

Further, the performing module 310 may be configured to perform the CHO from the serving cell to the selected optimal (or improved) target cell.

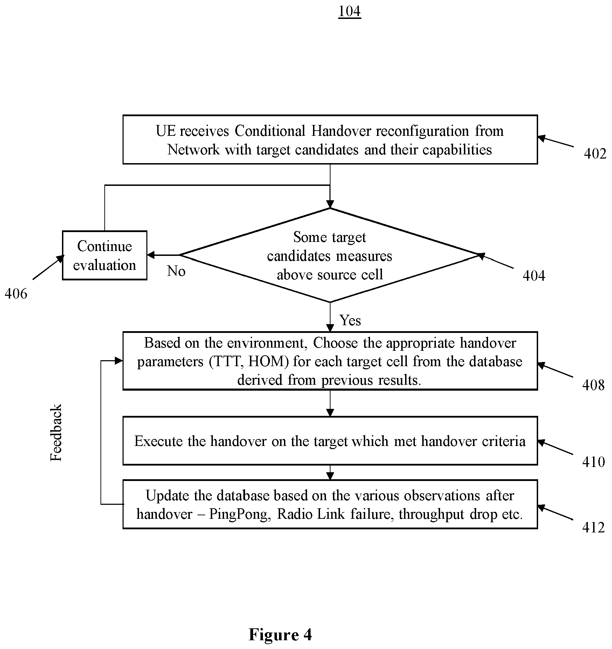

**Figure 4** illustrate a flow chart depicting the process of performing the CHO, according to embodiments of the present disclosure. The details of performing the CHO have been explained in detail with reference to Figure 3.

As shown in Figure 4, the present disclosure allows the UE 202 to compute optimal (or improved) handover parameters based on prevailing conditions and previous handover results, and apply for the potential CHO target cells. In the RRC connected state, the UE 202 is configured to receive CHO configurations from the network with target candidates and without handover trigger details, at operation 402. Additionally, the network may choose to specify the capabilities (ex: Slice type supported by cell) for each CHO candidate. At operation 404, the UE 202 may monitor all the CHO candidates and choose only the candidates (C1, C2, ..., Cm) whose measurement is better than serving cell/source cell (e.g., candidates having a higher signal strength). If the target candidates measure below (or equal to) the source cell, the evaluation is continued at operation 406. Alternatively, if at least one target candidate measures above the source cell (referred to in the remaining discussion of Figure 4 as the target candidates), the process proceeds to operation 408.

Further, at operation 408, the UE 202 determines HOM (Handover margin) / Offset and TTT (Time-to-Trigger) for each target candidate Cx using reinforcement learning. For example, based on the environment, the UE 202 selects the appropriate handover parameters (TTT, HOM) for each target cell from the database derived from previous results. In embodiments of the present disclosure, inputs to the reinforcement learning are slice type, source/target signal condition, UE 202 mobility speed, and the like. For example, the source/target signal condition may be Reference Signal Received Power (RSRP), Signal-to-Interference-Plus-Noise Ratio (SINR), Reference Signal Received Quality (RSRQ), and the like. The output is TTT and offset which are used for handover triggers.

At operation 410, the UE 202 executes the handover on the target that met the handover parameters. In embodiments of the present disclosure, the system 200 assigns rewards to the selected parameters based on the observations after (and/or based on) the handover. For example, Ping-Pong, Radio Link failure, Throughput drop, and the like. In embodiments of the present disclosure, Q-learning is employed for studying the system 200 performance. Further, at operation 412, the system 200 updates the database based on the various observations after (and/or based on) handover, such as PingPong, Radio Link failure, throughput drop, and the like. According to embodiments, the learning technique discussed above may be performed, or re-performed, using the information in the database.

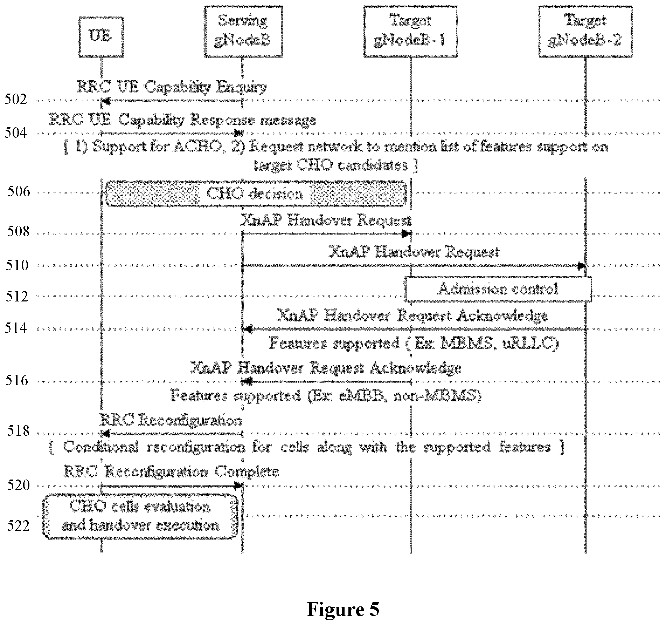

**Figure 5** illustrates a Sequence flow diagram depicting the operation of the system 200 for performing the CHO, according to embodiments of the present disclosure.

As shown in Figure 5, the RRC UE capability inquiry is received by the UE 202 from a serving gNodeB, at operation 502. Further, at operation 504, RRC UE capability response message is shared by the UE 202 to the serving gNodeB. In embodiments of the present disclosure, the UE 202 supports the system 200 for advanced conditional handover and requests the network to mention a list of features supported on target CHO candidates. Furthermore, at operation 506, the CHO decision is made.

At operation 508, an Xn Application Protocol (XnAP) handover request is shared from the serving gNodeB to the target gNodeB-1. At operation 510, the XnAP handover request is shared from the serving gNodeB to the target gNodeB-2. Further, at operation 512, an admission control process is performed. At operation 514, XnAP handover request acknowledgment is received by the serving gNodeB from the target gNodeB-2. For example, the features supported by the cell include Multimedia Broadcast Multicast Services (MBMS), uRLLC, and the like. Further, at operation 516, XnAP handover request acknowledgment is received by the serving gNodeB from the target gNodeB-1. At operation 518, RRC reconfiguration is received by the UE 202 from the serving gNodeB e.g., conditional reconfiguration for cells along with the supported features. At operation 520, RRC reconfiguration is completed. At operation 522, CHO cells are evaluated, and the handover is executed.

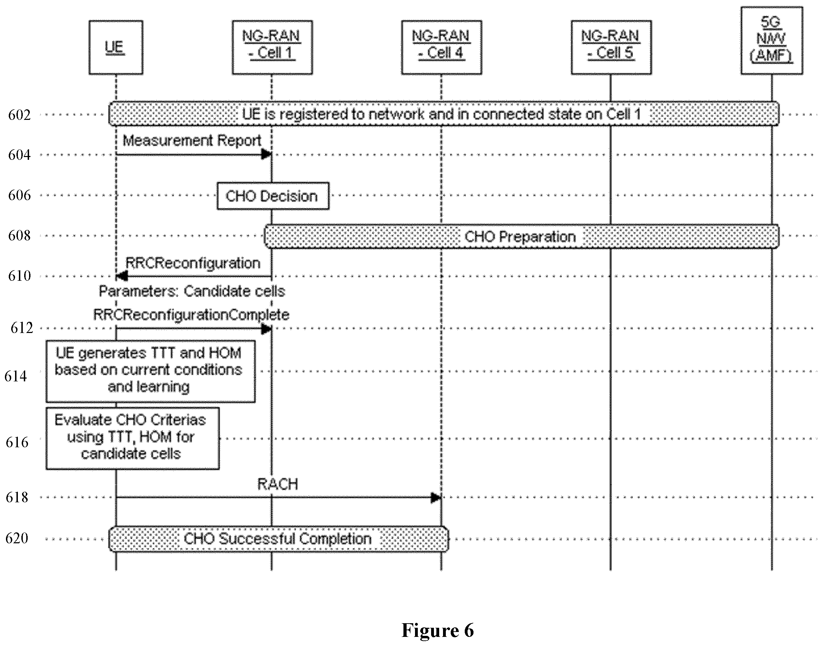

**Figure 6** illustrates a sequence flow diagram depicting the CHO success scenario, according to embodiments of the present disclosure. The details of CHO success scenario have been explained in detail with reference to Figure 3.

As shown in Figure 6, the UE 202 is registered on an NG-RAN Cell 1, at operation 602. Further, at operation 604, a measurement report is sent to the network. At operation 606, the network decides for CHO. Furthermore, at operation 608, the preparation phase is initiated for other cells (as UE 202 may HO to these cells based on matching criteria's). At operation 610, the NG-RAN Cell 1 network indicates candidate cells to be measured to UE using RRC reconfiguration.

Further, at operation 612, the UE 202 responds with RRC reconfiguration complete. At operation 614, the UE 202 generates the TTT and HOM parameters using current signaling conditions, slice type (service), mobility parameters, learning from previous handover results, and the like. At operation 616, the UE 202 evaluates CHO using these UE-generated TTT and HOM parameters for the given candidate cells. Further, at operation 618, the UE 202 initiates Random-Access Channel (RACH) procedure with target cell. As the current cell conditions are deteriorating and do not sustain longer TTT values, the UE 202 generates smaller TTT and performs the CHO based on the smaller TTT, at operation 620.

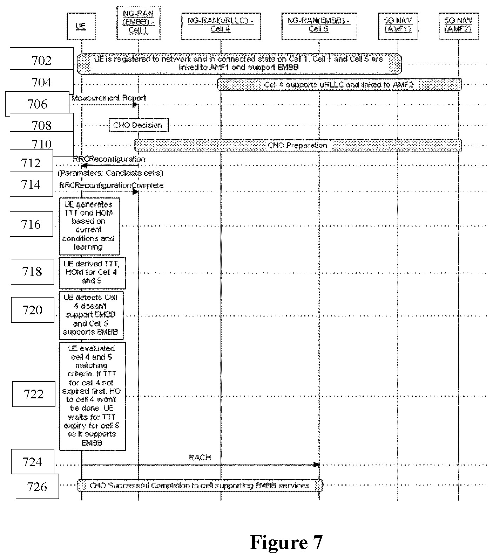

**Figure 7** illustrates a sequence flow diagram depicting a scenario of the CHO to a service-supported cell, according to embodiments of the present disclosure. The details on the CHO procedure to the service-supported cell have been explained in detail with reference to Figure 3.

As shown in Figure 7, the UE 202 is registered on an NG-RAN Cell 1, at operation 702. In embodiments of the present disclosure, the UE 202 is registered to the network and in a connected state on cell 1. Further, cells 1 and 5 are linked to AMF1 and support eMBB. At operation 704, the cell 4 supports uRLLC and is linked to AMF 2. Further, at operations 706, 708, and 710, the measurement report is sent to the network, such that the network makes a decision for CHO and the preparation phase is initiated to other cells (as the UE 202 may handover to these cells based on matching criteria).

At operation 712, the NG-RAN cell 1 network indicates candidate cells to be measured to the UE 202 using RRC reconfiguration. The UE 202 responds with RRC reconfiguration complete at operation 714. At operation 716, the UE 202 generates the TTT and HOM parameters using current signaling conditions, slice type (service), mobility parameters, and the like. At operation 718, the UE 202 evaluates CHO using these UE-generated TTT, and HOM parameters for given candidate cells (e.g., cells 4 and 5) along with service type. At operation 720, the UE 202 detects that cell 4 does not support eMBB and cell 5 supports eMBB. As the multiples cells are evaluated or under evaluation, the UE 202 considers service and measures cell 5 also until its TTT is expired, at operation 722. At operations 724 and 726, the UE 202 performs handover to cell 5 as it matches service and evaluation for handover.

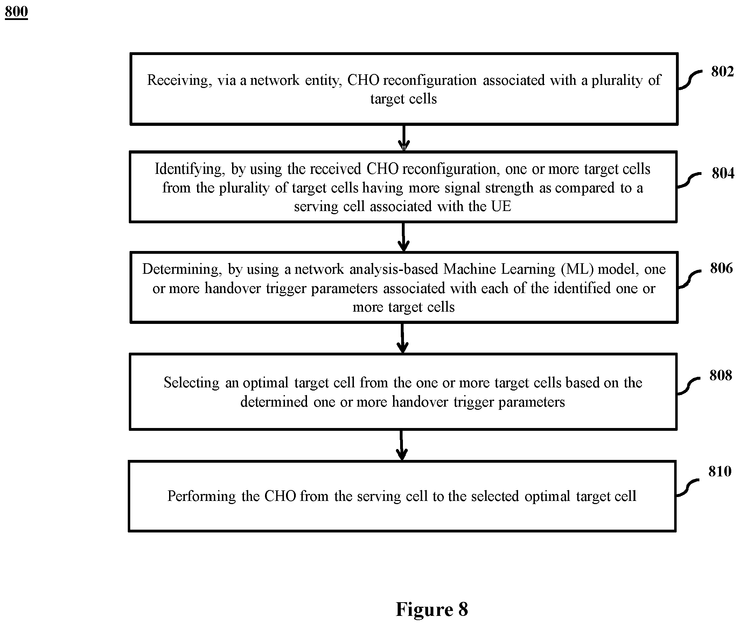

**Figure 8** illustrates an example process flow depicting a method 800 for performing Conditional Handover (CHO), according to embodiments of the present disclosure. The method 800 may be performed by the system 200 implemented in the UE 202, as shown in Figures 2 and 3.

At operation 802, the method 800 includes receiving, via a network entity, CHO reconfiguration associated with a plurality of target cells.

At operation 804, the method 800 includes identifying, by using the received CHO reconfiguration, one or more target cells from the plurality of target cells having more signal strength as compared to a serving cell associated with the UE 202.

At operation 806, the method 800 includes determining, by using a network analysis-based Machine Learning (ML) model, one or more handover trigger parameters associated with each of the identified one or more target cells based on one or more network parameters, historical handover data, and one or more mobility parameters impacting mobility. In embodiments of the present disclosure, the one or more network parameters include a slice type, serving cell signal conditions, target cell signal conditions, service type, one or more other network capabilities, or any combination thereof. The one or more mobility parameters impacting mobility include the velocity of the UE 202. Further, the historical handover data corresponds to one or more post-handover observations associated with the UE 202 upon performing the CHO to a corresponding target cell from the plurality of target cells. In embodiments of the present disclosure, the one or more post-handover observations include ping-pong, radio link failure, throughput drop, or any combination thereof. In embodiments of the present disclosure, the one or more handover trigger parameters include a Handover Margin (HOM) between source and target cells, source cell threshold, target cell threshold, and a Time-to-Trigger (TTT).

Further, at operation 808, the method 800 includes selecting an optimal (or improved) target cell from the one or more target cells based on the determined one or more handover trigger parameters.

At operation 810, the method 800 includes performing the CHO from the serving cell to the selected optimal (or improved) target cell. According to embodiments, after (and/or based on) performing the CHO to the selected target cell, the UE 202 may perform network communication with the target cell. For example, the UE 202 may generate a first signal, process the first signal to perform one or more among modulating, upconverting, filtering, amplifying and/or encrypting on the first signal, and transmit the processed first signal to the selected target cell via one or more antennas of the UE 202. Additionally or alternatively, the UE 202 may receive a second signal from the selected target cell via the one or more antennas of the UE 202, process the second signal to perform one or more among demodulating, downconverting, filtering, amplifying and/or decrypting on the second signal, and perform a further operation(s) based on the processed second signal. For example, the further operation(s) may include one or more of providing the processed second signal to a corresponding application executing on the UE 202, storing the processed second signal, sending a response signal to the selected target cell, etc.

While the above operations shown in Figure 8 are described in a particular sequence, the operations may occur in variations to the sequence in accordance with embodiments of the present disclosure. Further, the details related to various operations of Figure 8, which are already covered in the description related to Figures 2-7 are not discussed again in detail here for the sake of brevity.

The present disclosure provides for various technical advancements based on the key features discussed above. The present disclosure allows the UE 202 to compute optimal (or improved) handover parameters based on prevailing conditions and previous handover results, and apply for the potential CHO target cells. In RRC connected state, UE 202 is proposed to receive CHO configurations without handover trigger details. Additionally, a network may specify the capabilities (Ex: slice type supported by cell) for each CHO candidate. For example, the system 200 performs the CHO using conditional handover execution parameters (TTT and HO Margin) inferred independently by the UE 202 through reinforcement learning with inputs like source cell channel condition, CHO target cell channel condition, network slice, mobility parameters and previous results.

The plurality of modules 208 may be implemented by any suitable hardware and/or set of instructions. Further, the sequential flow illustrated in Figure 8 is an example and embodiments may include the addition/omission of operations therein. In embodiments, the one or more operations performed by the plurality of modules 208 may be performed by the processor/controller.

Conventional devices and methods for performing Conditional Handover (CHO) involve receiving, at a UE from a base station, a handover configuration including handover parameters such as Time-to-Trigger (TTT) and Handover Margin (HOM). However, conditions on which such handover parameters are based may change, between a timing at which the base station determines the handover parameters and a timing at which the CHO is performed, due to, for example, changing circumstances at the UE. For instance, a change in a movement speed of the UE, and/or changes in conditions at a serving cell or target cell (e.g., Reference Signal Received Power (RSRP), Signal-to-Interference-Plus-Noise Ratio (SINR), Reference Signal Received Quality (RSRQ), etc.) may render the handover parameters determined by the base station unsuitable. For example, in a scenario in which the base station provides a larger TTT and the conditions at the serving cell or target cell deteriorate, the CHO may not be possible using the larger TTT and/or may result in radio link failure. Also, conventionally, the base station does not provide any indications regarding service capabilities of candidate cells with the handover parameters. Accordingly, the conventional devices and methods are unable to prioritize candidate cells providing desired services (e.g., Enhanced Mobile Broadband) when performing CHO. Therefore, the conventional devices and methods fail to account for changing circumstances of the UE and/or service priorities, resulting in excessive radio link failure and/or CHO to a less desirable cell.

However, according to embodiments, improved devices and methods are provided for performing CHO. For example, the improved devices and methods may involve determining the handover parameters at the UE (e.g., using a network analysis-based Machine Learning model), thereby accounting for the changing circumstances at the UE to obtain more suitable handover parameters. Also, the improved devices and methods may involve receiving, from the base station, indications regarding service capabilities of candidate cells for use in performing CHO, thereby enabling for the prioritization of candidate cells providing desired services. Accordingly, the improved devices and methods overcome the deficiencies of the conventional devices and methods to at least reduce radio link failure and/or improve the likelihood of CHO to a desirable cell.

According to embodiments, operations described herein as being performed by the UE 202, the system 200, the one or more processors/controllers 204, the I/O interface 206, the plurality of modules 208, the operating system 214, the receiving module 302, the identifying module 304, the determining module 306, the selecting module 308, the performing module 310, the serving gNodeB, the target gNodeB-1, the target gNodeB-2, the NG-RAN cell 1, the NG-RAN cell 4, the NG-RAN cell 5, the AMF, the AMF 1, and/or the AMF 2 may be performed by processing circuitry. The term 'processing circuitry, ' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

In embodiments, the processing circuitry may perform some operations (e.g., the operations described herein as being performed by the network analysis-based Machine Learning model) by artificial intelligence and/or machine learning. As an example, the processing circuitry may implement an artificial neural network (e.g., the network analysis-based Machine Learning model) that is trained on a set of training data by, for example, a supervised, unsupervised, and/or reinforcement learning model, and wherein the processing circuitry may process a feature vector to provide output based upon the training. Such artificial neural networks may utilize a variety of artificial neural network organizational and processing models, such as convolutional neural networks (CNN), recurrent neural networks (RNN) optionally including long short-term memory (LSTM) units and/or gated recurrent units (GRU), stacking-based deep neural networks (S-DNN), state-space dynamic neural networks (S-SDNN), deconvolution networks, deep belief networks (DBN), and/or restricted Boltzmann machines (RBM). Alternatively or additionally, the processing circuitry may include other forms of artificial intelligence and/or machine learning, such as, for example, linear and/or logistic regression, statistical clustering, Bayesian classification, decision trees, dimensionality reduction such as principal component analysis, and expert systems; and/or combinations thereof, including ensembles such as random forests.

Herein, the machine learning model (e.g., the network analysis-based Machine Learning model) may have any structure that is trainable, e.g., with training data. For example, the machine learning model may include an artificial neural network, a decision tree, a support vector machine, a Bayesian network, a genetic algorithm, and/or the like. The machine learning model may be described by mainly referring to an artificial neural network, but embodiments are not limited thereto. Nonlimiting examples of the artificial neural network may include a convolution neural network (CNN), a region based convolution neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted Boltzmann machine (RBM), a fully convolutional network, a long short-term memory (LSTM) network, a classification network, and/or the like.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

While specific language has been used to describe the present subject matter, any limitations arising on account thereto, are not intended. As would be apparent to a person in the art, various working modifications may be made to the method in order to implement the inventive concepts as taught herein. The drawings and the foregoing description give examples of embodiments. Those skilled in the art will appreciate that one or more of the described elements may well be combined into a single functional element. Alternatively, certain elements may be split into multiple functional elements. Elements from one example may be added to another example.

## Claims

1. A method implemented in a user equipment (UE) for performing a conditional handover (CHO), the method comprising:
receiving, via a network entity, a CHO reconfiguration associated with a plurality of target cells;
identifying one or more target cells from among the plurality of target cells using the CHO reconfiguration, each of the one or more target cells having a higher signal strength than a serving cell associated with the UE;
determining one or more handover trigger parameters associated with each of the one or more target cells using a network analysis-based Machine Learning model, the determining of the one or more handover trigger parameters being based on one or more network parameters, historical handover data, and one or more mobility parameters;
selecting a first target cell from among the one or more target cells based on the one or more handover trigger parameters; and
performing the CHO from the serving cell to the first target cell.

2. The method as claimed in claim 1, wherein the one or more network parameters comprises at least one of a slice type, serving cell signal conditions, target cell signal conditions, service type, or one or more other network capabilities.

3. The method as claimed in claim 1 or 2, wherein the one or more mobility parameters comprise a velocity of the UE.

4. The method as claimed in any one of claims 1 to 3, wherein the historical handover data corresponds to one or more post handover observations associated with the UE based on performing a previous CHO to a previous target cell among the plurality of target cells, the one or more post handover observations including at least one of ping-pong, radio link failure, or throughput drop.

5. The method as claimed in any one of claims 1 to 4, wherein the one or more handover trigger parameters comprise a Handover Margin (HOM) between the serving cell and a respective target cell among the one or more target cells, a serving cell threshold, a target cell threshold, or a Time-to-Trigger (TTT).

6. A system associated with a user equipment (UE) for performing a conditional handover (CHO), the system comprising:
processing circuitry configured to
receive, via a network entity, a CHO reconfiguration associated with a plurality of target cells,
identify one or more target cells from among the plurality of target cells using the CHO reconfiguration, each of the one or more target cells having a higher signal strength than a serving cell associated with the UE,
determine one or more handover trigger parameters associated with each of the one or more target cells using a network analysis-based Machine Learning model, the determining of the one or more handover trigger parameters being based on one or more network parameters, historical handover data, and one or more mobility parameters,
select a first target cell from among the one or more target cells based on the one or more handover trigger parameters, and
perform the CHO from the serving cell to the first target cell.

7. The system as claimed in claim 6, wherein the one or more network parameters comprises at least one of a slice type, serving cell signal conditions, target cell signal conditions, service type, or one or more other network capabilities.

8. The system as claimed in claim 6 or 7, wherein the one or more mobility parameters comprise a velocity of the UE.

9. The system as claimed in any one of claims 6 to 8, wherein the historical handover data corresponds to one or more post handover observations associated with the UE based on performing a previous CHO to a previous target cell among the plurality of target cells, the one or more post handover observations including at least one of ping-pong, radio link failure, or throughput drop.

10. The system as claimed in any one of claims 6 to 9, wherein the one or more handover trigger parameters comprise a Handover Margin (HOM) between the serving cell and a respective target cell among the one or more target cells, a serving cell threshold, a target cell threshold, or a Time-to-Trigger (TTT).

11. A non-transitory computer-readable medium storing instructions that, when executed by at least one processor of a user equipment (UE), cause the at least one processor to perform a method for performing a conditional handover (CHO), the method comprising:
receiving, via a network entity, a CHO reconfiguration associated with a plurality of target cells;
identifying one or more target cells from among the plurality of target cells using the CHO reconfiguration, each of the one or more target cells having a higher signal strength than a serving cell associated with the UE;
determining one or more handover trigger parameters associated with each of the one or more target cells using a network analysis-based Machine Learning model, the determining of the one or more handover trigger parameters being based on one or more network parameters, historical handover data, and one or more mobility parameters;
selecting a first target cell from among the one or more target cells based on the one or more handover trigger parameters; and
performing the CHO from the serving cell to the first target cell.

12. The non-transitory computer-readable medium as claimed in claim 11, wherein the one or more network parameters comprises at least one of a slice type, serving cell signal conditions, target cell signal conditions, service type, or one or more other network capabilities.

13. The non-transitory computer-readable medium as claimed in claim 11 or 12, wherein the one or more mobility parameters comprise a velocity of the UE.

14. The non-transitory computer-readable medium as claimed in any one of claims 11 to 13, wherein the historical handover data corresponds to one or more post handover observations associated with the UE based on performing a previous CHO to a previous target cell among the plurality of target cells, the one or more post handover observations including at least one of ping-pong, radio link failure, or throughput drop.

15. The non-transitory computer-readable medium as claimed in any one of claims 11 to 14, wherein the one or more handover trigger parameters comprise a Handover Margin (HOM) between the serving cell and a respective target cell among the one or more target cells, a serving cell threshold, a target cell threshold, or a Time-to-Trigger (TTT).
